Europäisches Patentamt

European Patent Office

Office européen des brevets

(11) Publication number: **0 195 340**
**A1**

# EUROPEAN PATENT APPLICATION

(21) Application number: 86103163.1

(22) Date of filing: 10.03.86

(51) Int. Cl.⁴: **B23K 9/28**

(30) Priority: 08.03.85 IT 1983585

(43) Date of publication of application:
24.09.86 Bulletin 86/39

(84) Designated Contracting States:
AT BE CH DE FR GB LI LU NL SE

(71) Applicant: ANSALDO COMPONENTI S.p.A.
Viale Sarca, 336
I-20126 Milano(IT)

(72) Inventor: Panzeri, Cesare
Via Visconti, 49
I-20050 Macherio (Milan)(IT)

(74) Representative: Dr. Ing. A. Racheli & C.
Viale San Michele del Carso, 4
I-20144 Milano(IT)

(54) Torch for welding a narrow gap joint.

(57) A welding torch is described comprising a tip 30 with a through slot in which a welding wire is inserted. Said slot has a end section which diverges from the main axis A-A and is curved, such that the welding rod extends out of said end section at a predetermined angle. Said tip's axis AA of rotation is parallel to the joint's axis of symmetry. The tip 30 can also be translated by a suitable actuating means so as to alter its distance from the walls of the joint. If necessary, adjustment of the tip's range of rotation allows the angle of incidence relative to the walls of the joint to be varied.

FIG.1

EP 0 195 340 A1

## "TORCH FOR WELDING A NARROW GAP JOINT"

The present invention relates to a torch for welding a narrow gap joint, that is having very close edges at a slight inclination to one another, the area of the joint's cross section therefore being somewhat limited compared to that with preparation of normal edges.

In what follows, whenever "narrow gap joints with narrow edges" are referred to, what is meant are welded joints characterized by a very small number of beads per layer (1, 2 or 3 beads at the most), which is practically constant in all the layers making up the joint, and by the distance between the tops of the edges to be welded not exceeding in general 24 mm.

The particular conformation of the joint's edges requires a specially designed welding torch of a very small size due to the limited distance between the edges to be welded. In fact, the closeness and slight reciprocal inclination of the joint's edges drastically limits the space in which to move the torch across the line of the joint. This makes it especially difficult to correctly line up the beads and leads to the risk of striking secondary lateral arcs or incorrect positioning of the welding arc, which cause undesired side effects.

To get round this difficulty in guiding the torch with ease, various contrivances have been tried, such as prestraining the welding wire so that the end thereof extending out from the torch points in the desired direction, due to the springback effect. With this technique various chance factors may influence the springback of the rod and thereby greatly effect the accurate pointing of the wire's end section. In other cases the attempt has been made to make the end part of the torch movable, that is, it has been made to rotate at a preset angle on an axis perpendicular to the joint's cross section, so as to point the torch and the end section of the welding wire in the required direction relative to the edges. For this latter type of torch arrangements must be made to maintain continuous contact of the wire with the tip. Moreover, leakages in the movable section are considerable and as a result it is difficult to control the arc with precision.

Therefore, the object of this invention is to provide a device for welding a narrow gap joint which allows the welding wire placed in a slot in the tip to be pointed in the desired direction, thus permitting to obtain an optimal angle of incidence between the wall of the joint and the torch's electrode, such as to produce a good penetration of the welding with a remarkable quality increase.

The control of the electrode-wire's angular position allows to place the beads with greater precision inside the narrow gap joint and providing at the same time a better control of the arc and on the whole a low-cost device.

The invention consists in a torch made of highly conductive material, which is also wear-resistant, fitted with:

-an end section which is curved with respect to the welding wire's vertical axis in such a way that the wire extends out from the torch at a preset and constant angle;

-an actuating device for rotating the torch so as to adjust the electrode-wire's angle of incidence relative to the side walls of the joint, such that said angle is optimal for correct welding penetration;

-if necessary, a device for adjusting the position of the torch's axis of rotation relative to the arc striking point.

A torch made in this way allows two types of welding operation:

a) a welding of 1, 2 or 3 beads per layer for narrow edges;

b) welding with oscillation of torch.

Preferred but non-binding embodiments of this invention will now be illustrated with reference to the accompanying drawings, in which:

Fig. 1 shows a first embodiment of the torch according to the invention;

Fig. 2 shows an example of a pneumatic actuating means for rotating the torch on its vertical axis:

Fig. 3 shows another embodiment of the torch with positioning controlled by a stepping motor;

Fig. 4 is an embodiment of the torch adapted for gas welding.

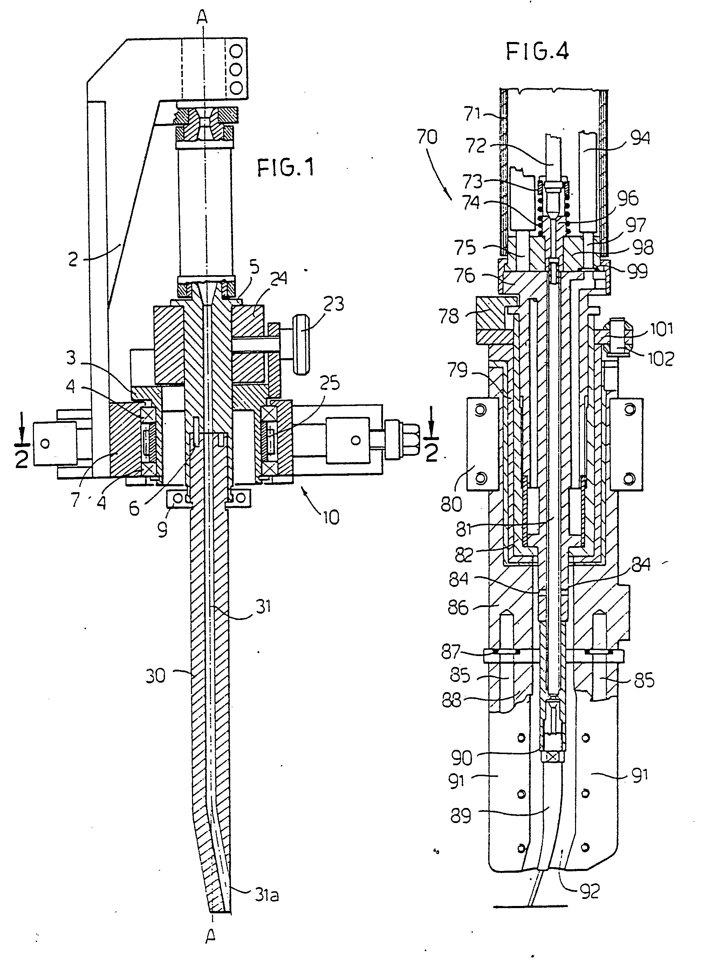

Fig. 1 shows a first exemplary embodiment of a torch 10 provided with a tip 30 with a slot, in which the welding wire is inserted. As can be seen in Fig. 1, the slot 31 has an end section 31a which is curved relative to the slot's main axis A-A such that the wire extends out of said slot at an angle determined by the angle of said end section of the slot. The angle of inclination of section 31a relative to the axis A-A is between 5° and 10°. The tip 30 is locked to a pinion 5 by means of a pin 6 and a coupling 9. The pinion 5 is engaged, by means of a flange 3 and bearings 4, to a unit 7 which, in turn, is integral with a support 2 fixed to the device for controlling, actuating and guiding the torch. According to the embodiment shown the tip 30 rotates on the slot's axis A-A or on another axis, offset relative to the first.

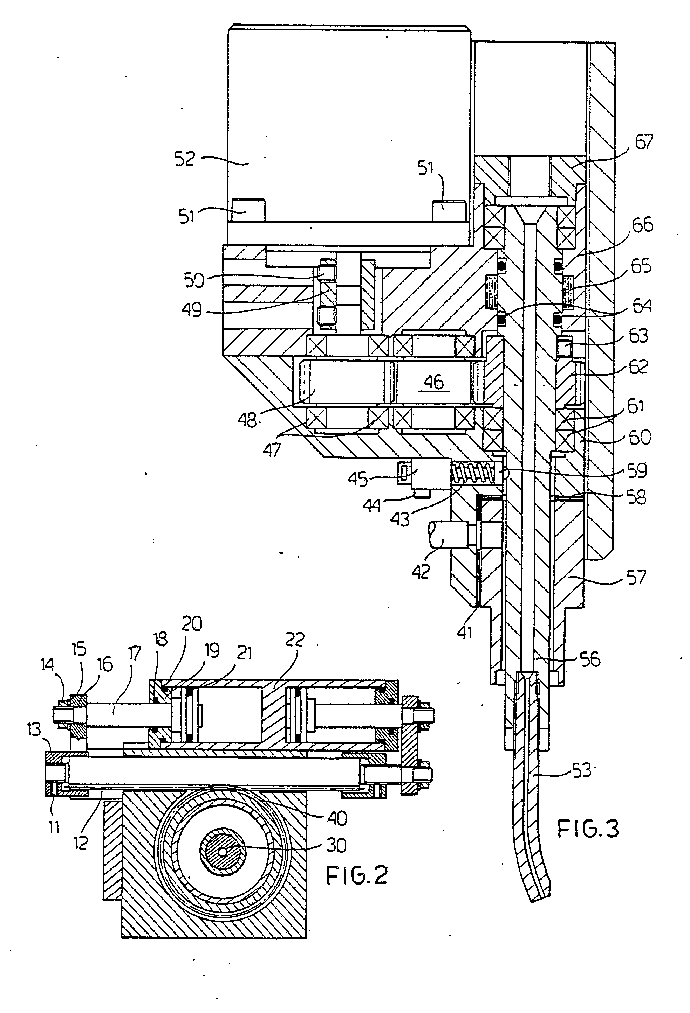

As can be seen in Fig. 2, the whole tip 30 of the torch 10 can rotate by means of the pinion 40 and the rack 12, driven by an actuating device made up of a three-position cylinder. The travel of the rack and therefore the torch's angle of rotation can be adjusted by means of the stop 13. Fig. 2 also shows the nut 14 and washer 15 for engaging with the support 16 of the piston 17. Said piston 17 is inserted in a head 19, suitable gaskets 18, 20 and 21 being provided, so that it can move inside the cylinder 22. The above-said three-position cylinder, suitably operated, allows rotation of the torch so as to adjust the angle of incidence of the electrode-wire at the curved section 31a relative to the walls of the joint.

The position of the axis A-A relative to that of the pinion 40 can be adjusted by means of the handwheel 23 and slide 24, to which the torch is fixed.

Two cases result from what has been stated above:

1) offset position (axis of pinion 25 coincides with the rod/workpiece point of contact): welding occurs without oscillation of the electrode;

2) centered position (axis A-A coincides with that of the pinion 25); welding occurs with oscillation of the electrode.

A further embodiment of the torch is shown in Fig. 3. From the latter it can be seen that the tip is moved by means of an actuating device made up of a stepping motor 52, fixed by means of screws 51 to the unit.

In this figure the tip 53 can be seen with its end section inclined at an angle relative to the main axis. The torch also comprises the insulator 41, gas tube 42 and the inside pin 59 spring 43, connected to the microswitch 45 engaged by the screws 44. The unit also comprises the pinions 46 and 48, assembled on ball bearings 47, and the coupling 49 to which the dowel 50 is connected.

The shaft 56, which supports the tip 53, is inserted in the tip-holder 57, insulated from the body 60 by the insulator 58. The shaft 56 is also engaged with the pinon 62, with the body 60 by means of the bearings 61 and with the rear body 66, also by means of bearings. The dowel 63, gaskets 64, mercury coupling 65 and clamp 67 are shown also in this figure.

This torch is made using the same criteria applied in the previous embodiment. It should be noted that the end section 53 of the tip is interchangeable. The latter is suitable for rods of very small diameter.

This type of torch with a curved tip can also be used for submerged arc welding, whereas for gas welding, shown in fig. 4, arc-protecting gas nozzles are fitted.

In Fig. 4 the tip which has a curved end from which the wire protrudes is indicated by 89. The rod is placed in an opening 81 in the support 76.

If we now examine the other elements making up the unit it can be seen that it is enveloped in the upper part by shielding 71. The sheath 72 of the rod ends with a bushing, on which rests a spring 74 which acts on a clamp 96. The electrical cable enters through a hole 75 in the side. The support 76 is locked to the side by brackets 78 and 80. A fixed bushing 79 and an insulating bushing 82 are arranged concentric to the support.

The body of the torch 76 is provided with holes for the gasflow. In the casing 86 with nozzles 88 at the end, openings 85 are provided for the circulation of cooling water, surrounded by gaskets 87.

The tip 89 is easy to remove from the stem of the torch and replace. The nozzles are protected by grips 92. There is also a rubber tube 94 at the side which ends in the hose adapter 97 in the distributor 98, connected to support 76 by means of a gasket.

There is also a bracket 101 in which is inserted a pin 102 for the rotation of the torch-stem on its axis, driven by a pneumatic or electric actuator.

It can be clearly seen that this new torch always gives continuous contact of the wire with the tip, leakages of current are reduced and there is greater control over the arc. Moreover, the sheathing can be fitted externally to the joint without problems of size limitations.

In conclusion these torches, used with the system of guidance on three axes (subject of a previous patent application under the name of the same applicant), allow automatic welding of normal and narrow joints with the submerged arc welding (SAW) or gas welding (MIG-MAG) process, having the following characteristics:

-suitable deflection of the electrode (wire) with respect to the edge of the joint. This allows an angle of incidence relative to the walls of the joint, which is optimal for correct penetration in welding narrow joints.

-change of synchronised deflection for "slalom" run. This allows automatic continuous welding from bottom to top when welding narrow joints with 2 or 3 beads per layer or traditional multibead ones.

-Adjustable oscillation range of electrode (wire). This allows high-quality welding and an increase in the rate at which the weld material is fed and therefore greater productivity.

-Flexibility of use. The end section of the torch can be easily modified for use in submerged arc (Fig. 1) or gas - (Fig. 4) welding.

**Claims**

1. A torch for welding a narrow gap joint, said device being made of highly conductive material and provided with a tip with a flattened section, in which there is a through slot for inserting the welding wire, characterized in that it comprises an actuating device for rotating the torch so as to adjust the electrode-rod's angle of incidence relative to the side walls of the joint for correct welding penetration, and in that the end section of the tip is curved with respect to the welding rod's vertical axis so that the latter extends out therefrom at a constant prefixed angle.

2. A welding torch according to claim 1, characterized in that said curved end section of the through slot in the tip has wide-radius connection with the remaining part.

3. A welding torch according to claim 2, characterized in that the angle of inclination relative to the slot's axis is between 5° and 10°C.

4. A welding torch according to claim 1, characterized in that said actuating device for imparting rotatation is a suitably operated three-position cylinder.

5. A welding torch according to claim 1, characterized in that said actuating device for imparting rotation is made up of a suitably operated stepping motor.

6. A welding torch according to claim 1, characterized by a device for adjusting the position of the torch's axis of rotation relative to the arc striking point in order to achieve the wire/wall angle of incidence in welding narrow joints and wire oscillation in welding traditional-type joints.

7. A welding torch according to claim 6, characterized in that the device for adjusting the position of the axis is composed of a slide controlled by a suitable handwheel.

0 195 340

FIG.1

FIG.4

FIG.3

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 336 722 (BRITISH INSULATED CALLENDER'S) * Page 1, line 37 - page 2, line 55 * | 1,6 | B 23 K 9/28 |
| Y | | 2,7 | |
| Y | US-A-3 534 389 (BERNARD) * Figures * | 2 | |
| Y | US-A-4 229 641 (IHARA) * Figure 12 * | 7 | |
| A | DE-A-3 220 242 (SIEMENS) | | |

TECHNICAL FIELDS SEARCHED (Int. Cl.4)

B 23 K 9/00

The present search report has been drawn up for all claims

| Place of search | Date of completion of the search | Examiner |
|---|---|---|
| THE HAGUE | 11-06-1986 | BERTIN M.H.J. |